# EUROPÄISCHE PATENTSCHRIFT

(11) **EP 3 767 752 B1**
(45) Veröffentlichungstag und Bekanntmachung des Hinweises auf die Patenterteilung: **18.02.2026**
(21) Anmeldenummer: 19186890.0
(22) Anmeldetag: 18.07.2019
(51) Int. Cl.: H01R 11/12, H01R 13/00, H01R 13/02, B60L 53/302, B60L 53/18, H01B 7/42

(54) **KONFEKTIONIERTES ELEKTRISCHES KABEL, VERFAHREN ZUR KONFEKTIONIERUNG EINES ELEKTRISCHEN KABELS UND ELEKTRISCHE STECKVERBINDUNG**
ASSEMBLED ELECTRICAL CABLE, METHOD FOR ASSEMBLING AN ELECTRICAL CABLE AND ELECTRICAL PLUG-IN CONNECTION
CÂBLE ÉLECTRIQUE PRÉASSEMBLÉ, PROCÉDÉ DE PRÉASSEMBLAGE D'UN CÂBLE ÉLECTRIQUE ET CONNECTEUR ENFICHABLE ÉLECTRIQUE

(43) Veröffentlichungstag der Anmeldung: 20.01.2021
(73) Patentinhaber: Rosenberger Hochfrequenztechnik GmbH & Co. KG, 83413 Fridolfing (DE)
(72) Erfinder: Gottanka, Johann, 84533 Marktl (DE); Rolshausen, Maximilian, 83278 Traunstein (DE); Liebhart, Josef, 83119 Obing (DE)
(74) Vertreter: Lorenz, Markus

(56) Entgegenhaltungen:
- EP-A2- 2 081 196
- WO-A1-2009/115208
- WO-A1-2018/046994
- WO-A1-2019/115026
- CA-A- 961 126
- DE-A1- 2 412 129
- GB-A- 974 006
- US-A- 2 969 415
- US-A- 5 170 930
- US-A- 5 301 421
- US-B1- 9 887 477

## Beschreibung

Die Erfindung betrifft ein konfektioniertes elektrisches Kabel gemäß Anspruch 1.

Die Erfindung betrifft ferner einen elektrischen Steckverbinder gemäß Anspruch 10.

Die Erfindung betrifft außerdem eine elektrische Steckverbindung gemäß Anspruch 11.

Die Erfindung betrifft auch ein Verfahren zur Konfektionierung eines elektrischen Kabels gemäß Anspruch 12.

Bei der Konfektionierung von Kabeln werden deren Enden in der Regel mit einem elektrischen Steckverbinder oder zumindest mit Komponenten bzw. Baugruppen eines elektrischen Steckverbinders verbunden. Beispielsweise kann im Rahmen der Kabelkonfektionierung ein Kontaktelement des späteren Steckverbinders mit einem Innenleiter des Kabels elektrisch und mechanisch verbunden und anschließend in einer Gehäusebaugruppe des Steckverbinders montiert werden. Das fertig montierte Kontaktelement kann somit der späteren Kontaktierung mit einem Gegenkontaktelement eines mit dem Steckverbinder verbindbaren Gegensteckverbinders dienen.

Bei einem Steckverbinder bzw. Gegensteckverbinder kann es sich um einen Stecker, einen Einbaustecker, eine Buchse, eine Kupplung oder einen Adapter handeln. Die im Rahmen der Erfindung verwendete Bezeichnung "Steckverbinder" bzw. "Gegensteckverbinder" steht stellvertretend für alle Varianten.

Insbesondere an Steckverbinder und elektrische Kabel für die Automobilindustrie bzw. für Fahrzeuge werden hohe Anforderungen an deren Robustheit und die Sicherheit der Steckverbindungen gestellt. Vor allem die Elektromobilität stellt die Automobilindustrie und deren Zulieferer vor große Herausforderungen, da in den Fahrzeugen über die Kabel bzw. über die Steckverbindungen hohe elektrische Leistungen übertragen werden müssen. Die thermische Belastung bzw. die entstehende Abwärme, die mit dem hohen Stromfluss einhergeht, ist dabei nicht unerheblich.

Um die in den Kabeln und in den Steckverbindungen entstehende Wärme abführen zu können werden im Stand der Technik mitunter gekühlte Hochvoltkabel eingesetzt (sog. "Cool Harness"-Konzept). In der Regel wird bei derartigen Kabeln ein Kühlkanal in Längsrichtung durch das Kabel geführt, der an einen Kühlkreislauf angeschlossen und zum Abtransport der Wärme von einer Kühlflüssigkeit durchlaufen wird. Ein derartiges Kabel wird beispielsweise in der gattungsgemäßen Druckschrift DE 199 21 310 A1 beschrieben.

Problematisch ist allerdings die Verbindungsstelle zwischen dem gekühlten Kabel und dem Steckverbinder. Da auch in diesem Bereich eine Kühlung erforderlich sein kann, wird in der DE 199 21 310 A1 vorgeschlagen, zunächst einen Kabelschuh mit einer Crimphülse mit dem Innenleiter des Kabels zu verbinden. Der Kabelschuh wird dann von einem Schraubbolzen durchgriffen und kann mittels des Schraubbolzens mit dem Kontaktelement des Hochvoltsteckverbinders verbunden werden. Aufgrund der Schraubverbindung kann außerdem eine Verbindung mit einer Kühlkammer an der Verbindungsstelle mit dem Kontaktelement erfolgen.

Diese bekannte Verbindungslösung benötigt vergleichsweise viele Bauteile. Ferner ist die Verbindung durch die spezifische Anordnung der Bauteile starr und ermöglicht keine flexible Orientierung zwischen dem Hochvoltkabel und dem Kontaktelement des Steckverbinders. Eine gewisse Flexibilität kann allerdings insbesondere zum Toleranzausgleich erstrebenswert sein. Ferner besteht eine weitere Anforderung an Steckverbinder für die Automobilindustrie darin, dass diese in hohen Stückzahlen wirtschaftlich herstellbar sein müssen. Die in der DE 199 21 310 A1 beschriebene Verbindungstechnik eignet sich hierfür nur bedingt.

Ein weiteres gekühltes Kabel mit einem sich durch das Kabel erstreckenden Kühlkanal ist aus der GB 974 006 A bekannt. Zur Verbindung des Innenleiters mit einem Kontaktelement wird vorgeschlagen, das Kontaktelement stirnseitig in das Kabel einzuführen, wodurch eine kraftschlüssige Verbindung mit dem Innenleiter entsteht, die von dem Kabelmantel des Kabels gestützt wird. Auch diese Verbindungslösung ist allerdings vergleichsweise unflexibel in der Orientierung bzw. Ausrichtung des Kontaktelements relativ zu dem Kabel.

Zum weiteren technischen Hintergrund sei außerdem noch auf die EP 2 081 196 A2 verwiesen, die ein Kabel aus einem Bündel einzelner Leiter betrifft, die um einen zentralen Kühlkanal gewunden und am Kabelende mit einem gemeinsamen Kontaktelement verbunden sind.

WO 2009/115208 A1, CA 961 126 A und WO 2018/046994 A1 offenbaren weitere Beispiele für ein konfektioniertes elektrisches Kabel.

In Anbetracht des bekannten Stands der Technik besteht die Aufgabe der vorliegenden Erfindung darin, ein gekühltes konfektioniertes elektrisches Kabel bereitzustellen, dessen Innenleiter auf besonders vorteilhafte Weise mit einem Kontaktelement verbunden ist.

Der vorliegenden Erfindung liegt auch die Aufgabe zugrunde, einen elektrischen Steckverbinder bereitzustellen, der ein gekühltes konfektioniertes elektrisches Kabel aufweist, dessen Innenleiter auf besonders vorteilhafte Weise mit einem Kontaktelement verbunden ist.

Schließlich ist es auch Aufgabe der Erfindung, eine elektrische Steckverbindung mit einem verbesserten elektrischen Steckverbinder bereitzustellen, insbesondere zur Verwendung in der Hochvolttechnik.

Außerdem ist es Aufgabe der Erfindung, ein Verfahren zur Konfektionierung eines gekühlten elektrischen Kabels bereitzustellen, bei dem ein Innenleiter des Kabels mit einfachen Mitteln, und insbesondere auch flexibel zum Toleranzausgleich, mit einem Kontaktelement eines Steckverbinders verbunden werden kann.

Die Aufgabe wird für das konfektionierte Kabel mit den in Anspruch 1 aufgeführten Merkmalen gelöst. Hinsichtlich des elektrischen Steckverbinders wird die Aufgabe durch die Merkmale des Anspruchs 10 und bezüglich der elektrischen Steckverbindung durch die Merkmale des Anspruchs 11 gelöst. Betreffend das Verfahren wird die Aufgabe durch Anspruch 12 gelöst.

Die abhängigen Ansprüche und die nachfolgend beschriebenen Merkmale betreffen vorteilhafte Ausführungsformen und Varianten der Erfindung.

Es ist ein konfektioniertes elektrisches Kabel vorgesehen, aufweisend einen sich entlang der Mittelachse des Kabels erstreckenden Kühlkanal. Das Kabel weist außerdem wenigstens einen entlang der Außenfläche des Kühlkanals verlaufenden Innenleiter und einen den Innenleiter und den Kühlkanal in sich führenden Kabelmantel auf. Ferner weist das Kabel ein Kontaktelement für einen elektrischen Steckverbinder auf, das elektrisch und mechanisch mit zumindest einem von dem Kabelmantel freigelegten Abschnitt des Innenleiters verbunden ist.

Das Kontaktelement weist vorzugsweise eine flache Geometrie auf. Die Dicke des Kontaktelements kann sehr viel kleiner sein als die Breite und die Länge des Kontaktelements. Vorzugsweise ist ein plattenförmiges Kontaktelement vorgesehen.

Vorzugsweise kann außerdem ein längliches Kontaktelement vorgesehen sein. Die Länge des Kontaktelements kann entlang einer Längsachse größer sein als seine Breite.

Bei dem elektrischen Kabel kann es sich insbesondere um ein Hochvoltkabel bzw. um eine Hochvoltleitung zur Übertragung von hohen Strömen, beispielsweise mit Spannungen von 1.500 Volt oder mehr, handeln.

Das erfindungsgemäße elektrische Kabel kann besonders vorteilhaft in elektrisch angetriebenen Fahrzeugen, beispielsweise in Elektrofahrzeugen oder Hybridfahrzeugen, eingesetzt werden.

Der Querschnitt des Kabels kann beispielsweise 10 mm² oder mehr, vorzugsweise 50 mm² oder mehr, beispielsweise auch 100 mm² oder mehr, 200 mm² oder mehr, oder 300 mm² oder mehr betragen.

Das elektrische Kabel kann grundsätzlich eine beliebige Anzahl Innenleiter aufweisen, beispielsweise einen Innenleiter, zwei Innenleiter oder mehr Innenleiter, drei Innenleiter oder mehr Innenleiter, vier Innenleiter oder mehr Innenleiter, fünf Innenleiter oder mehr Innenleiter. Die Erfindung ist nachfolgend im Wesentlichen anhand eines elektrischen Kabels beschrieben, das genau einen Innenleiter aufweist. Dies ist jedoch nicht einschränkend zu verstehen.

Der oder die Innenleiter des Kabels können koaxial zu der Mittelachse des Kabels angeordnet sein. Der oder die Innenleiter können gleichmäßig um die Mittelachse des Kabels verteilt sein.

Vorzugsweise verläuft der wenigstens eine Innenleiter abschnittsweise oder vollständig auf der Außenfläche des Kühlkanals und berührt den Kühlkanal somit unmittelbar. Insbesondere wenn der wenigstens eine Innenleiter die Außenfläche des Kühlkanals unmittelbar berührt, kann die durch den Stromfluss entstehende Wärme vorteilhaft abgeführt werden.

Durch das erfindungsgemäß gekühlte elektrische Kabel können sich neben der Reduzierung des in umgebende Baugruppen eingebrachten Wärmeeintrags auch noch weitere Vorteile ergeben. Beispielsweise kann der Kabelquerschnitt ggf. verkleinert und damit das Gewicht des Kabels verringert werden, da die Kühlung auch den elektrischen Widerstand des Kabels verringern kann.

Bei dem freigelegten Abschnitt des Innenleiters, mit dem das Kontaktelement verbunden ist, kann es sich vorzugsweise um einen Endabschnitt des Innenleiters bzw. um eines der beiden Enden des Innenleiters handeln. Grundsätzlich kann sich die Erfindung allerdings auch dazu eigenen, ein Kontaktelement mit einem freigelegten, mittleren Abschnitt des Innenleiters zu verbinden.

Erfindungsgemäß ist vorgesehen, dass der Innenleiter stoffschlüssig mit dem Kontaktelement verbunden oder plattenförmig kompaktiert ist, um das Kontaktelement auszubilden.

Erfindungsgemäß kann somit eine vorteilhafte Kontaktierung eines gekühlten konfektionierten elektrischen Kabels, insbesondere eines Hochvoltkabels, bereitgestellt werden.

Insbesondere auf eine Schraubverbindung, Nietverbindung oder Crimpverbindung zwischen dem Innenleiter und dem Kontaktelement kann im Rahmen der Erfindung verzichtet werden. Es kann vorgesehen sein, dass der Innenleiter und das Kontaktelement nicht kraftschlüssig miteinander verbunden sind. Es kann vorgesehen sein, dass der Innenleiter und das Kontaktelement nicht formschlüssig miteinander verbunden sind. Insbesondere kann vorgesehen sein, dass der Innenleiter ausschließlich stoffschlüssig mit dem Kontaktelement verbunden ist.

Der Innenleiter kann insbesondere unlösbar mit dem Kontaktelement verbunden sein, wodurch sich der Innenleiter nicht mehr zerstörungsfrei von dem Kontaktelement entfernen lässt.

Es ist ein besonderer Vorteil der Erfindung, dass das Kontaktelement flexibel zu dem elektrischen Kabel orientiert und/oder positioniert werden kann.

Beispielsweise kann eine Verkippung des Kontaktelements um seine Längsachse vorgegeben oder kompensiert werden.

Ferner kann beispielsweise eine Ausrichtung der Längsachse des Kontaktelements relativ zu der Mittelachse des Kabels vorgegeben oder kompensiert werden. Beispielsweise kann die Längsachse des Kontaktelements parallel zu der Mittelachse des Kabels ausgerichtet sein, orthogonal zu der Mittelachse des Kabels ausgerichtet sein oder gemäß einem sonstigen Winkel zu der Mittelachse des Kabels ausgerichtet sein.

Schließlich kann beispielsweise auch ein Abstand zwischen dem Kontaktelement und dem Kabel oder dem Kühlkanal vorgegeben oder kompensiert werden.

Auch die Position des vorderen Endes des Kontaktelements, das zur Verbindung mit einem Gegenkontaktelement eines Gegensteckverbinders vorgesehen ist, kann vergleichsweise flexibel entlang der Mittelachse des Kabels festgelegt oder kompensiert werden.

In einer vorteilhaften Weiterbildung der Erfindung kann vorgesehen sein, dass der Kühlkanal koaxial zu der Mittelachse des Kabels verläuft.

Durch eine koaxiale Anordnung des Kühlkanals können der konzentrische Aufbau des Kabels und der erzielbare Kühleffekt verbessert sein.

Vorzugsweise ist der Kühlkanal aus einem elektrisch nichtleitenden Material ausgebildet, beispielsweise aus einem Kunststoff.

Besonders bevorzugt ist der Kühlkanal flexibel in der Art eines Schlauchs ausgebildet, um die Biegsamkeit des Kabels möglichst wenig zu beeinflussen. Es kann anwendungsbedingt allerdings auch ein starrer Kühlkanal in der Art eines Rohres vorgesehen sein.

Der Kühlkanal kann beispielsweise in der Art eines Pneumatikschlauchs bzw. Glattschlauchs ausgebildet sein. Der Kühlkanal kann allerdings auch als Endlosprofil mit einer Innen- und/oder Außenprofil ausgebildet sein.

Erfindungsgemäß ist vorgesehen, dass der Innenleiter, wenn dieser stoffschlüssig mit der von dem Kühlkanal abgewandten Oberfläche des Kontaktelements verbunden ist, als Litze aus mehreren Einzeldrähten ausgebildet ist, die einzeln oder paketweise entlang des Umfangs des Kühlkanals verteilt sind.

Insbesondere die Verwendung eines Innenleiters, der als Litze ausgebildet ist, eignet sich erfindungsgemäß für die stoffschlüssige Verbindung oder die Ausbildung des Kontaktelements vorteilhaft. Grundsätzlich kann sich die Erfindung im Falle einer plattenförmigen Kompaktierung, um das Kontaktelement auszubilden, allerdings auch zur Verwendung mit einem Innenleiter eignen, der nur aus einem einzelnen Draht ausgebildet ist.

Insbesondere eine gleichmäßige Verteilung mehrerer Innenleiter oder der Einzeldrähte von wenigstens einem als Litze ausgebildeten Innenleiter über den Umfang des Kühlkanals kann die Wärmeabführung verbessern und außerdem auch zur mechanischen Stabilität des Kabels beitragen.

Es kann vorgesehen sein, dass der Kühlkanal oder eine auf dem Kühlkanal verlaufende Innenleiterführung an der Außenfläche profiliert ist und insbesondere Rillen, Nuten und/oder Stege aufweist, um einen oder mehrere Drähte eines oder mehrere Innenleiter entlang des Umfangs des Kühlkanals auf Abstand voneinander zu halten. Grundsätzlich kann die Außenfläche des Kühlkanals allerdings auch glatt ausgebildet sein. Eine Profilierung des Kühlkanals oder eine profilierte Innenleiterführung kann allerdings insbesondere von Vorteil sein, um die Drähte des oder der Außenleiter gleichmäßig entlang des Umfangs des Kühlkanals zu verteilen.

Erfindungsgemäß ist vorgesehen, dass ein Großteil oder alle Einzeldrähte der Litze an deren Austrittsstelle aus dem Kabelmantel zusammengeführt bzw. gebündelt sind, wenn der Innenleiter stoffschlüssig mit der von dem Kühlkanal abgewandten Oberfläche des Kontaktelements verbunden ist.

Die Einzeldrähte können dabei insbesondere in einem Winkelsegment oder einem Kreissegment zusammengeführt bzw. gebündelt sein.

Zur Befestigung des Kontaktelements an dem Innenleiter und optional zur Ausbildung des Kontaktelements aus dem Innenleiter ist erfindungsgemäß vorgesehen, einen Großteil oder alle Einzeldrähte der Litze zusammenzuführen bzw. zu bündeln, insbesondere in einem - im Querschnitt des Kabels betrachtet - Winkelsegment bzw. Kreissegment mit einem Mittelpunktswinkel von 180° oder weniger, vorzugsweise 90° oder weniger, besonders bevorzugt 60° oder weniger, beispielsweise 45° oder weniger, 30° oder weniger oder auch 20° oder weniger.

Die Erfinder haben erkannt, dass die Flexibilität der Verbindung des Innenleiters mit dem Kontaktelement, insbesondere zum Toleranzausgleich, verbessert sein kann, wenn die Einzeldrähte an deren Austrittstelle aus dem Kabelmantel zunächst zusammengeführt werden.

Insofern der Innenleiter stoffschlüssig mit dem Kontaktelement verbunden ist, ist erfindungsgemäß vorgesehen, dass der Innenleiter mit einer von dem Kühlkanal abgewandten Oberfläche des Kontaktelements stoffschlüssig verbunden ist.

Dadurch, dass der Innenleiter mit der von dem Kühlkanal abgewandten Oberfläche des Kontaktelements verbunden ist, ist die Länge des Innenleiters, insbesondere der einzelnen Drähte einer Litze, ausgehend von der Austrittsstelle aus dem Kabelmantel bis zu dem Verbindungsbereich mit dem Kontaktelement, zusätzlich verlängert. Dies kann die flexible Orientierung und/oder Anordnung des Kontaktelements zu dem elektrischen Kabel zusätzlich verbessern.

Ferner kann die Zugänglichkeit des Verbindungsbereichs des Kontaktelements, an dem der Innenleiter befestigt werden soll, während der Konfektionierung des elektrischen Kabels verbessert sein bzw. die stoffschlüssige Verbindung zwischen Innenleiter und Kontaktelement einfacher herstellbar sein, wenn der Innenleiter mit der von dem Kühlkanal abgewandten Oberfläche des Kontaktelements verbunden wird.

In einer Weiterbildung der Erfindung kann vorgesehen sein, dass der Innenleiter mit dem Kontaktelement verschweißt, vorzugweise pressgeschweißt, widerstandsgeschweißt oder schmelzgeschweißt ist, um die stoffschlüssige Verbindung auszubilden.

Grundsätzlich sind beliebige stoffschlüssige Verbindungstechniken möglich. Besonders bevorzugt erfolgt die Verbindung zwischen dem Innenleiter und dem Kontaktelement allerdings durch Kontaktschweißen bzw. Widerstandsschweißen.

Um die Wärmeleitfähigkeit und gleichzeitig auch die Schweißbarkeit des Kontaktelements noch zu optimieren kann vorgesehen sein, das Kontaktelement bevorzugt aus Messing auszubilden. Grundsätzlich kann allerdings auch vorgesehen sein, das Kontaktelement aus einem anderen Material herzustellen, beispielsweise aus Aluminium oder in Einzelfällen auch aus Gold (aufgrund der hohen Kosten jedoch nicht bevorzugt).

In einer vorteilhaften Weiterbildung der Erfindung kann vorgesehen sein, dass der Innenleiter und/oder das Kontaktelement mit einer Wärmeleitpaste beschichtet ist.

Um die Wärmeleitfähigkeit zwischen dem Innenleiter und dem Kontaktelement, insbesondere zwischen Einzeldrähten einer Litze und dem Kontaktelement, noch zusätzlich zu verbessern, kann der Innenleiter und/oder das Kontaktelement mit einer Wärmeleitpaste beschichtet bzw. ummantelt sein. Die Wärmeleitpaste kann sehr gut in Zwischenräume zwischen Drähte des Innenleiters eindringen und damit zu einer verbesserten Wärmeabführung führen.

In einer vorteilhaften Weiterbildung der Erfindung kann vorgesehen sein, dass der Innenleiter geschweißt, vorzugweise pressgeschweißt, widerstandsgeschweißt oder schmelzgeschweißt ist, um das Kontaktelement auszubilden.

Eine derartige Ausgestaltung hat sich als besonders geeignet herausgestellt, um das Kontaktelement aus dem Innenleiter, insbesondere aus einem als Litze ausgebildeten Innenleiter, auszubilden.

Auf vorteilhafte Weise kann auf ein separates Kontaktelement verzichtet werden, wenn der Innenleiter selbst das Kontaktelement ausbildet.

Beispielsweise können die Einzeldrähte einer Litze zu dem Kontaktelement verdichtet und miteinander verschweißt werden.

Durch eine derartige Kompaktierung bzw. Paketierung der einzelnen Drähte der Litze lassen sich Lufteinschlüsse zwischen den Einzeldrähten im Bereich von höchstens 10 Vol.-%, bevorzugt höchstens 5 Vol.-%, und weiter bevorzugt höchstens 3 Vol.-%, realisieren.

In einer Weiterbildung der Erfindung kann vorgesehen sein, dass das Kontaktelement einen Anschlussbereich, insbesondere mit einer Zentrierbohrung (oder einer sonstigen Bohrung), zur Verbindung mit einem Gegenkontaktelement eines elektrischen Gegensteckverbinders ausbildet.

Der Anschlussbereich ist vorzugsweise an dem von dem Verbindungsbereich des Innenleiters mit dem Kontaktelement abgewandten Ende des Kontaktelements ausgebildet (bezogen auf die Längsachse des Kontaktelements).

Beispielsweise kann vorgesehen sein, dass das separate Kontaktelement oder das aus dem Innenleiter ausgebildete und kompaktierte Kontaktelement eine Durchgangsbohrung oder ein Sackloch zur Aufnahme eines länglichen Gegenkontaktelements aufweist, beispielsweise eines hülsenförmigen oder pinförmigen Gegenkontaktelements.

In einer vorteilhaften Weiterbildung der Erfindung kann vorgesehen sein, dass wenigstens ein Abschnitt des Kontaktelements (bzw. ein Abschnitt der dem Kühlkanal zugewandten Oberfläche des Kontaktelements) unmittelbar an der Außenfläche des Kühlkanals anliegt, um eine wärmeleitfähige Verbindung mit dem Kühlkanal herzustellen.

Neben der verbesserten Kühlung kann auf diese Weise außerdem eine vorteilhafte Führung des Kühlkanals außerhalb des Kabels bereitgestellt werden.

Es kann allerdings auch vorgesehen sein, dass die dem Kühlkanal zugewandte Oberfläche des Kontaktelements nicht mit dem Kühlkanal in Verbindung steht oder mittelbar über ein zwischen dem Kontaktelement und dem Kühlkanal angeordnetes, weiteres Bauteil (z. B. das nachfolgend noch beschriebene Verbindungselement) mit dem Kühlkanal in Verbindung steht.

In einer vorteilhaften Weiterbildung der Erfindung kann vorgesehen sein, dass das Kontaktelement auf seiner dem Kühlkanal zugewandten Oberfläche eine Anlagefläche aufweist, insbesondere eine dem Kühlkanal komplementäre Vertiefung oder eine sonstige Vertiefung, die den Kühlkanal zumindest entlang eines Umfangsabschnitts an seinem Außenumfang umfasst.

Die Anlagefläche kann eine Führung für den Kühlkanal ausbilden, um den Kühlkanal zumindest abschnittsweise zu führen, um die Berührfläche zwischen dem Kühlkanal und dem Kontaktelement zu vergrößern.

Die Anlagefläche kann die Außengeometrie, insbesondere einen Radius, des Kühlkanals als Negativ nachbilden, um den Kühlkanal möglichst spielfrei aufzunehmen.

Beispielsweise kann das mit dem Innenleiter stoffschlüssig verbundene Kontaktelement auf der dem Kühlkanal zugewandten Oberfläche eine wannenförmige oder rinnenartige Vertiefung zur Führung des Kühlkanals aufweisen. Auch das aus dem Innenleiter gebildete Kontaktelement kann derart kompaktiert sein, dass eine wannenförmige oder rinnenartige Vertiefung entsteht.

Eine Anlagefläche kann auch erst durch eine entsprechende Nachbearbeitung des Kontaktelements in die Oberfläche des Kontaktelements eingebracht werden.

In einer vorteilhaften Weiterbildung der Erfindung kann vorgesehen sein, dass zwischen dem Kontaktelement und dem Kühlkanal ein Verbindungselement angeordnet ist, das an dem Kontaktelement und an dem Kühlkanal anliegt, um eine wärmeleitfähige Verbindung zwischen dem Kühlkanal und dem Kontaktelement herzustellen.

Das Verbindungselement ist vorzugsweise aus einem gut wärmeleitfähigen Material ausgebildet, um die Wärmeübertragung zwischen dem Kontaktelement und dem Kühlkanal weiter zu verbessern.

Das Verbindungselement kann bevorzugt aus einem Kunststoff ausgebildet sein.

In einer vorteilhaften Weiterbildung der Erfindung kann vorgesehen sein, dass das Verbindungselement auf seiner dem Kühlkanal zugewandten Oberfläche eine Anlagefläche aufweist, insbesondere eine dem Kühlkanal komplementäre Vertiefung oder eine sonstige Vertiefung, die den Kühlkanal zumindest entlang eines Umfangsabschnitts an seinem Außenumfang umfasst.

Um die Berührfläche des Verbindungselements mit dem Kühlkanal zu vergrößern und ggf. auch um eine verbesserte Führung des Kühlkanals außerhalb des elektrischen Kabels bereit zu stellen, kann die genannte Anlagefläche von Vorteil sein.

Beispielsweise kann die bereits hinsichtlich des Kontaktelements beschriebene Anlagefläche auch für das Verbindungselement realisiert werden, insbesondere eine Anlagefläche mit einer wannenförmigen oder rinnenartigen Vertiefung.

Vorzugsweise kann auch vorgesehen sein, dass das Verbindungselement den Kühlkanal vollumfänglich umschließt, insbesondere im Bereich der Verbindung mit dem Kontaktelement. Hierfür kann insbesondere eine Durchgangsbohrung durch das Verbindungselement vorgesehen sein.

Das elektrische Kabel kann als geschirmtes oder ungeschirmtes Kabel ausgebildet sein. Die Verwendung eines geschirmten elektrischen Kabels kann insbesondere zur Verbesserung der elektromagnetischen Verträglichkeit (EMV) von Vorteil sein. Bei einem geschirmten elektrischen Kabel kann vorgesehen sein, dass zwischen dem Kabelmantel und dem wenigstens einen Innenleiter bzw. dem Kühlkanal ein Außenleiterschirm entlang der Mittelachse des Kabels verläuft (vorzugsweise koaxial zu der Mittelachse). Ferner kann ein Isolator vorgesehen sein, der entlang der Mittelachse des Kabels verläuft (vorzugsweise koaxial zu der Mittelachse) und der zwischen dem Außenleiterschirm und dem wenigstens einen Innenleiter angeordnet ist. Wenn der Innenleiter zur Verbindung mit dem Kontaktelement oder zur Ausbildung des Kontaktelements von dem Kabelmantel freigelegt wird, sollte der Innenleiter somit auch von dem Isolator und dem Außenleiterschirm freigelegt werden. Der Außenleiterschirm kann anschließend elektrisch mit einer Abschirmung des Steckverbinders bzw. dessen Kontaktbereichs (Interface) verbunden werden, beispielsweise mit einem Schirmgehäuse des elektrischen Steckverbinders.

Die Erfindung betrifft auch einen elektrischen Steckverbinder mit einer Gehäusebaugruppe und zumindest einem konfektionierten elektrischen Kabel. Das elektrische Kabel weist einen sich entlang der Mittelachse des Kabels erstreckenden Kühlkanal und wenigstens einen entlang der Außenfläche des Kühlkanals verlaufenden Innenleiter auf. Das elektrische Kabel weist ferner einen den Innenleiter und den Kühlkanal in sich führenden Kabelmantel und ein Kontaktelement für einen elektrischen Steckverbinder auf. Das Kontaktelement ist elektrisch und mechanisch mit zumindest einem von dem Kabelmantel freigelegten Abschnitt des Innenleiters verbunden. Es ist vorgesehen, dass der Innenleiter stoffschlüssig mit einer von dem Kühlkanal abgewandten Oberfläche des Kontaktelements verbunden oder plattenförmig kompaktiert ist, um das Kontaktelement auszubilden.

Bei der Gehäusebaugruppe des Steckverbinders kann es sich insbesondere um ein Kunststoffgehäuse handeln, beispielsweise ein einteiliges Kunststoffgehäuse oder ein mehrteiliges Kunststoffgehäuse, das aus einer oberen Gehäuseschale und einer unteren Gehäuseschale besteht.

Die Gehäusebaugruppe oder der Steckverbinder können außerdem Dichtringe, Kabelfesthaltungen bzw. Bauteile zum Zugabfang, Abschlusskappen sowie weitere Steckverbinderkomponenten aufweisen.

Die Gehäusebaugruppe kann ausgebildet sein, wenigstens ein mit dem Kontaktelement konfektioniertes elektrisches Kabel aufzunehmen. Die Gehäusebaugruppe kann insbesondere ausgebildet sein, ein einziges mit dem Kontaktelement konfektioniertes elektrisches Kabel aufzunehmen oder genau zwei mit jeweils einem Kontaktelement konfektionierte elektrische Kabel aufzunehmen. Grundsätzlich kann allerdings auch vorgesehen sein, dass die Gehäusebaugruppe ausgebildet ist um drei, vier, fünf, sechs oder noch mehr konfektionierte Kabel aufzunehmen.

Der erfindungsgemäße Steckverbinder stellt eine bauteilminimierte Lösung dar. Insbesondere auf Schraubverbindungen oder Crimpverbindungen zwischen dem Innenleiter und dem Kontaktelement kann verzichtet werden.

Vorzugsweise ist der elektrische Steckverbinder als Hochvoltsteckverbinder, insbesondere zur Verwendung in einem elektrisch angetriebenen Fahrzeug, ausgebildet. Der elektrische Steckverbinder ist allerdings nicht auf einen spezifischen Steckverbindertyp oder auf die Verwendung in einem Fahrzeug beschränkt. Besonders eignen sich allerdings Steckverbindungen zur Übertragung von hohen Strömen und Spannungen zur Verwendung mit der Erfindung.

Die Erfindung betrifft auch eine elektrische Steckverbindung, aufweisend einen elektrischen Steckverbinder, insbesondere gemäß den vorstehenden und nachfolgenden Ausführungen, sowie einen mit dem elektrischen Steckverbinder verbindbaren elektrischen Gegensteckverbinder.

Insbesondere eignet sich die erfindungsgemäße Steckverbindung zur Verwendung in einem elektrisch angetriebenen Fahrzeug.

Der Begriff "Fahrzeug" beschreibt dabei jegliches Fortbewegungsmittel, insbesondere Fahrzeuge zu Lande, zu Wasser oder in der Luft, eingeschlossen auch Raumfahrzeuge.

Eine Kühlvorrichtung kann ausgebildet sein, ein Kühlmittel, insbesondere ein Fluid, ganz besonders bevorzugt eine Flüssigkeit, durch den Kühlkanal des elektrischen Kabels zu pumpen.

In vorteilhafter Weise kann die Kühlvorrichtung Teil eines ohnehin vorhandenen Kühlkreislaufes des Fahrzeugs sein.

Die Erfindung betrifft schließlich auch ein Verfahren zur Konfektionierung eines elektrischen Kabels gemäß Anspruch 1, mit zumindest den in Anspruch 12 genannten Verfahrensschritten.

Das Kompaktieren des Innenleiters, insbesondere eines als Litze ausgebildeten Innenleiters mit mehreren Einzeldrähten, kann zu einem formstabilen Bereich und damit zur Ausprägung eines Kontaktelements führen. Auf ein separates Kontaktelement kann somit verzichtet und weiteres Material eingespart werden.

Insbesondere kann aber auch die Variante der stoffschlüssigen Verbindung zwischen dem Innenleiter und dem Kontaktelement vorteilhaft sein um Material einzusparen, insbesondere Schrauben und/oder Crimphülsen.

Im Rahmen des Verfahrens zur Konfektionierung des elektrischen Kabels kann auch vorgesehen sein, zunächst das elektrische Kabel herzustellen. Hierzu kann beispielsweise vorgesehen sein, zunächst den einen Innenleiter oder die mehreren Innenleiter, insbesondere aber Einzeldrähte eines als Litze ausgebildeten Innenleiters, um den Kühlkanal herum zu verseilen und anschließend den Kabelmantel zu extrudieren.

Das zu konfektionierende Kabel kann als Meterware vorliegen. Vor dem Freilegen des Innenleiters kann somit beispielsweise vorgesehen sein, das elektrische Kabel definiert abzulängen.

Es kann vorgesehen sein, nach dem stoffschlüssigen Verbinden des Innenleiters mit dem Kontaktelement oder nach dem plattenförmigen Kompaktieren des Innenleiters das Kontaktelement mit einem isolierenden Berührschutz zu bestücken, der ein versehentliches Berühren des Kontaktelements in dem späteren Steckverbinder verhindern kann. Der Berührschutz kann eine hülsenförmige Komponente mit einer Durchgangsbohrung aufweisen, um in dem Steckverbinder einen definierten Zugang zu dem Kontaktelement möglichst nur für das korrespondierende Gegenkontaktelement des Gegensteckverbinders bereitzustellen. Der Berührschutz kann beispielsweise auch einteilig mit dem vorstehend beschriebenen Verbindungselement ausgebildet sein.

Im Rahmen des Konfektionierungsverfahrens kann auch vorgesehen sein, einen Nullschnitt des mit dem Kontaktelement stoffschlüssig verbundenen Innenleiters vorzunehmen, um ein definiertes Ende des Innenleiters, insbesondere der Einzeldrähte einer Litze, zu erzeugen.

Nach dem Freilegen des Innenleiters und vor dem stoffschlüssigen Verbinden oder vor dem Kompaktieren des Innenleiters kann beispielsweise auch vorgesehen sein, einen als Litze mit mehreren Einzeldrähten ausgebildeten Innenleiter zunächst aufzufächern. Der aufgefächerte Innenleiter kann anschließend in einem Winkelsegment zusammengeführt bzw. gebündelt werden.

Die erfindungsgemäße Steckverbindung bzw. das erfindungsgemäße Konfektionierungsverfahren ist besonders wirtschaftlich einsetzbar und eignet sich damit insbesondere auch im Hinblick auf eine Massenfertigung.

Merkmale, die im Zusammenhang mit dem erfindungsgemäßen elektrischen Kabel beschrieben wurden, sind selbstverständlich auch für den elektrischen Steckverbinder, die elektrische Steckverbindung, das Fahrzeug und das Verfahren vorteilhaft umsetzbar - und umgekehrt. Ferner können Vorteile, die bereits im Zusammenhang mit dem erfindungsgemäßen elektrischen Kabel genannt wurden, auch auf den elektrischen Steckverbinder, die elektrische Steckverbindung, das Fahrzeug und das Verfahren bezogen verstanden werden - und umgekehrt.

Grundsätzlich können Vorteile und Merkmale, die sich auf die stoffschlüssige Verbindung des Innenleiters mit dem Kontaktelement beziehen, auch auf den plattenförmig kompaktierten Innenleiter (der das Kontaktelement selbst ausbildet), übertragen werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen im Rahmen der Erfindung als abgeschlossen betrachtet werden, beispielsweise jeweils für jeden Anspruch betrachtet. Die Erfindung kann beispielswiese ausschließlich aus den in Anspruch 1 genannten Merkmalen bestehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: ein konfektioniertes elektrisches Kabel mit einem Kühlkanal, einem Innenleiter, einem Kabelmantel und einem Kontaktelement gemäß einem ersten Ausführungsbeispiel, in einer perspektivischen Darstellung;
- Figur 2: ein konfektioniertes elektrisches Kabel mit einem Kühlkanal, einem Innenleiter, einem Kabelmantel und einem Kontaktelement gemäß einem zweiten Ausführungsbeispiel, in einer perspektivischen Darstellung;
- Figur 3: ein konfektioniertes elektrisches Kabel mit einem Kühlkanal, einem Innenleiter, einem Kabelmantel und einem Kontaktelement gemäß einem dritten Ausführungsbeispiel, in einer perspektivischen Darstellung;
- Figur 4: ein konfektioniertes elektrisches Kabel mit einem Kühlkanal, einem Innenleiter, einem Kabelmantel und einem Kontaktelement gemäß einem vierten Ausführungsbeispiel, in einer perspektivischen Darstellung;
- Figur 5: das konfektionierte elektrische Kabel der Figur 4 in einer Schnittdarstellung;
- Figur 6: ein konfektioniertes elektrisches Kabel mit einem Kühlkanal, einem Innenleiter, einem Kabelmantel und einem Kontaktelement gemäß einem fünften Ausführungsbeispiel, in einer perspektivischen Darstellung;
- Figur 7: das konfektionierte elektrische Kabel der Figur 6 in einer Schnittdarstellung;
- Figur 8: ein elektrisches Kabel mit einem Kühlkanal gemäß einer ersten Ausgestaltung im Querschnitt;
- Figur 9: ein elektrisches Kabel mit einem Kühlkanal gemäß einer zweiten Ausgestaltung im Querschnitt;
- Figur 10: ein elektrisches Kabel mit einem Kühlkanal gemäß einer dritten Ausgestaltung im Querschnitt;
- Figur 11: einen elektrischen Steckverbinder mit zwei konfektionierten elektrischen Kabeln in einer perspektivischen Explosionsdarstellung;
- Figur 12: eine elektrische Steckverbindung aus einem elektrischen Steckverbinder und einem elektrischen Gegensteckverbinder in einer perspektivischen Darstellung; und
- Figur 13: ein Verfahren zur Konfektionierung eines elektrischen Kabels mit beispielhaften Verfahrensschritten.

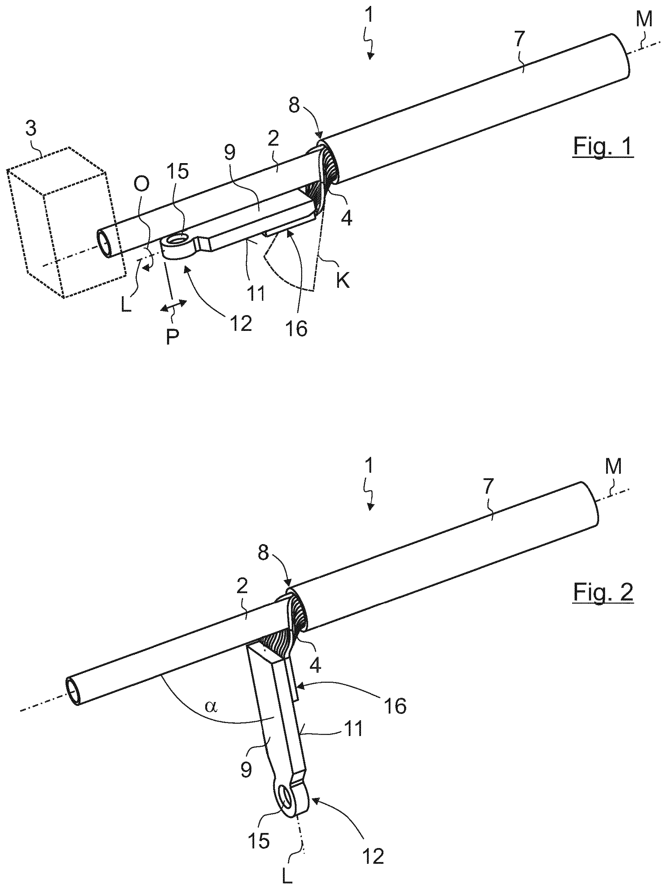

Figur 1 zeigt ein konfektioniertes elektrisches Kabel 1. Das Kabel 1 weist einen sich entlang der Mittelachse M des Kabels 1 erstreckenden Kühlkanal 2 auf. In den Ausführungsbeispielen verläuft der Kühlkanal 2 koaxial zu der Mittelachse M des Kabels 1 und ist vorzugsweise flexibel ausgebildet, in der Art eines Schlauchs, um die Biegefähigkeit des Kabels 1 nicht zu gefährden. Der Kühlkanal 2 ist vorzugsweise aus einem nicht leitenden Material, beispielsweise aus einem Kunststoff, ausgebildet. Der Kühlkanal 2 kann mit einer Kühlvorrichtung 3 (in Figur 1 strichliniert als Black Box angedeutet), beispielsweise eines Fahrzeugs, verbunden sein. Mittels des Kühlkanals 2 kann die in das elektrische Kabel 1 aufgrund eines hohen Stromflusses eingetragene Wärme vorteilhaft abgeführt werden. Vorzugsweise wird hierfür ein Kühlmittel, insbesondere eine Kühlflüssigkeit, durch den Kühlkanal 2 gepumpt.

Das Kabel 1 weist ferner wenigstens einen Innenleiter 4 auf, der entlang der Außenfläche des Kühlkanals 2 verläuft. In den Ausführungsbeispielen gemäß den Figuren 1 bis 7 ist ein koaxial verlaufender Innenleiter 4 vorgesehen, der auf der Außenfläche des Kühlkanals 2 verläuft. Vorzugsweise ist der Innenleiter 4 als Litze aus mehreren Einzeldrähten ausgebildet, die entlang des Umfangs des Kühlkanals 2 verteilt sind, wie in den Ausführungsbeispielen dargestellt. Die Einzeldrähte können dabei einzeln oder paketweise entlang des Umfangs des Kühlkanals 2 verteilt sein.

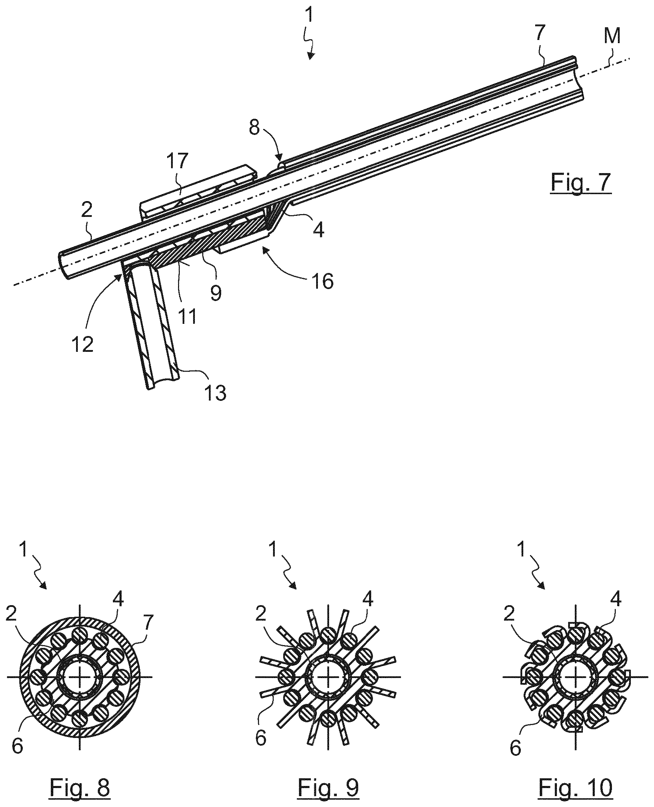

Um den wenigstens einen Innenleiter 4 und/oder die Einzeldrähte des wenigstens einen Innenleiters 4 entlang der Außenfläche des Kühlkanals 2 zu führen, kann der Kühlkanal 2 optional an seinem Außenumfang profiliert sein. Der Kühlkanal 2 kann aber auch nicht profiliert, d. h. an seiner Außenfläche glatt sein. Es kann auch vorgesehen sein, dass der Kühlkanal 2 von einer Innenleiterführung 6 zumindest abschnittsweise umhüllt ist, was beispielsweise wie in den Figuren 8 bis 10 im Querschnitt dargestellt ist. Beispielsweise können Nuten gemäß Figur 8, stegförmige Ausprägungen gemäß Figur 9 bis hin zu krallenförmigen Führungsmitteln gemäß Figur 10 an der Außenfläche des Innenleiterführung 6 oder des Kühlkanals 2 vorgesehen sein.

Das Kabel 1 weist ferner einen den Innenleiter 4 und den Kühlkanal 2 in sich führenden Kabelmantel 7 auf. Die Einzeldrähte des als Litze ausgebildeten Innenleiters 4 sind an deren Austrittsstelle 8 aus dem Kabelmantel 7 in einem Winkelsegment bzw. Kreissegment K zusammengeführt.

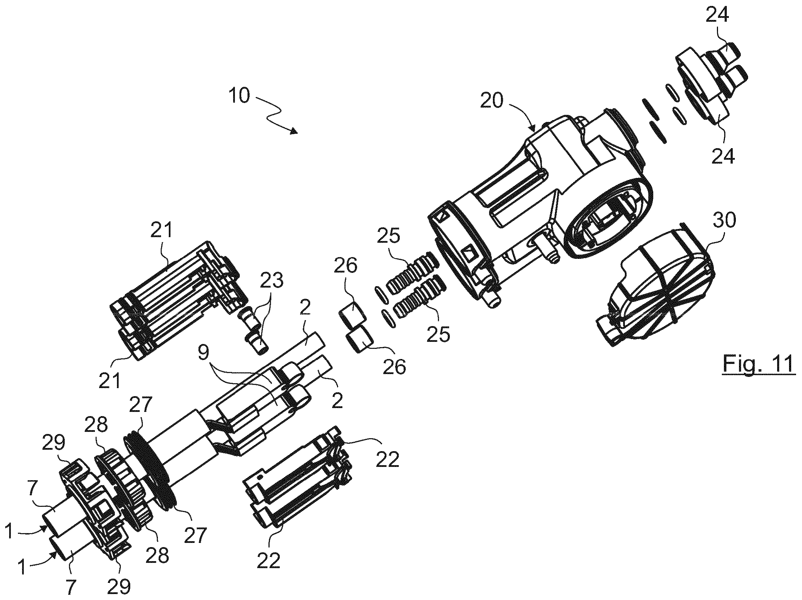

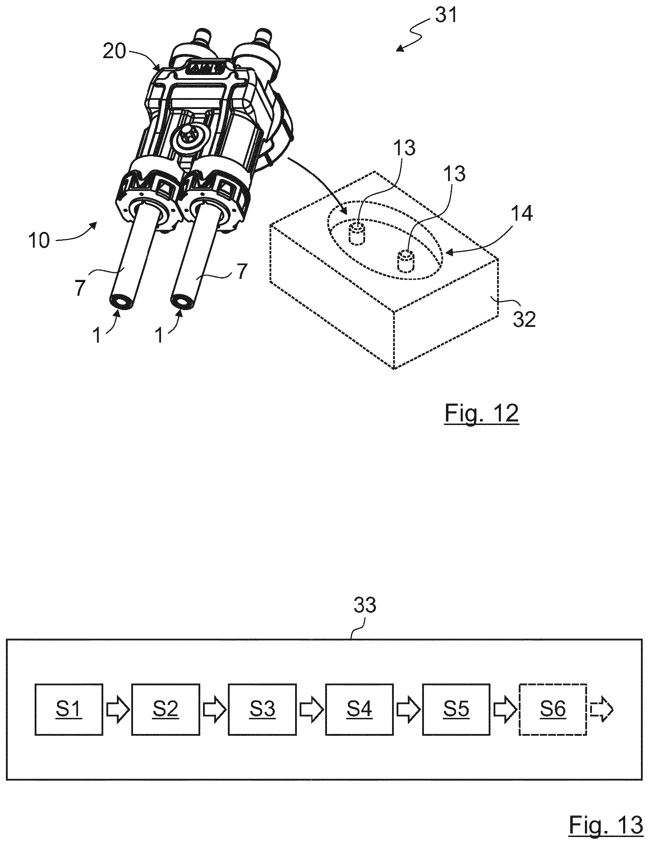

Das konfektionierte Kabel 1 weist ferner ein Kontaktelement 9 für einen elektrischen Steckverbinder 10 (vgl. Figur 11 oder Figur 12) auf, das elektrisch und mechanisch mit zumindest einem von dem Kabelmantel 7 freigelegten Abschnitt des Innenleiters 4 verbunden ist. Im Ausführungsbeispiel ist das Kontaktelement 9 mit einem Endabschnitt des Innenleiters 4 verbunden; grundsätzlich kann allerdings auch vorgesehen sein, dass das Kontaktelement 9 mit einem mittleren Abschnitt des Innenleiters 4, der entsprechend freigelegt wurde, verbunden ist. Bei dem Kontaktelement 9 handelt es sich vorzugsweise um ein längliches Bauteil mit flacher Geometrie, das sich vornehmlich in Längsrichtung entlang einer Längsachse L erstreckt.

Gemäß einer ersten Variante der Erfindung ist vorgesehen, dass der Innenleiter 4 stoffschlüssig mit dem Kontaktelement 9 verbunden ist (vgl. Figuren 1 und 2, 4 bis 7 sowie 11). Vorzugsweise ist der Innenleiter 4 hierzu, wie in den Ausführungsbeispielen dargestellt, mit einer von dem Kühlkanal 2 abgewandten Oberfläche 11 des Kontaktelements 9 verbunden. Der Innenleiter 4 ist dabei vorzugsweise mit dem Kontaktelement 9 verschweißt, beispielsweise pressgeschweißt, widerstandsgeschweißt oder schmelzgeschweißt, um die stoffschlüssige Verbindung auszubilden.

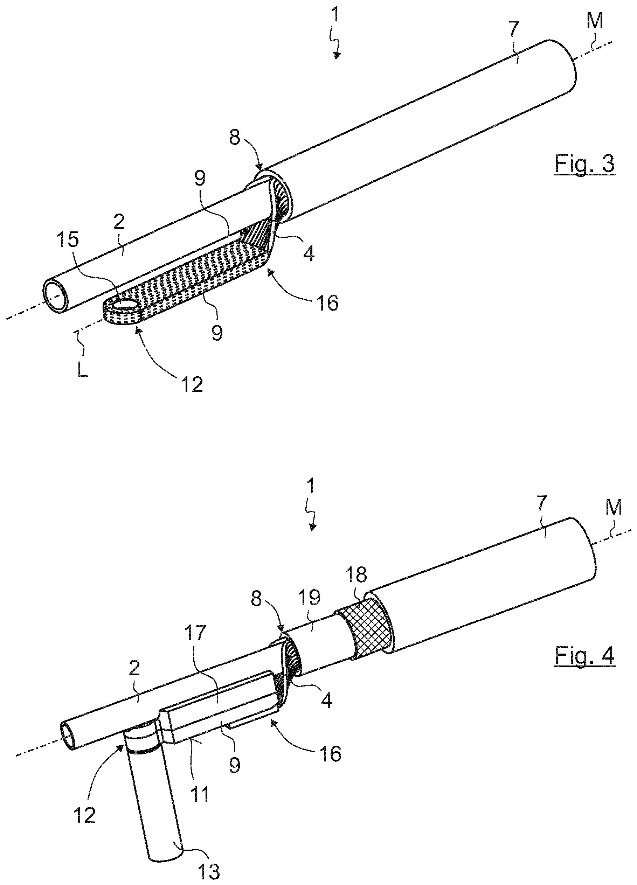

In Figur 3 ist eine zweite Variante der Erfindung dargestellt, bei der der Innenleiter 4 plattenförmig kompaktiert ist, um selbst das Kontaktelement 9 auszubilden. Auf ein separates Kontaktelement 9 kann somit verzichtet werden. Der Innenleiter 4 kann vorzugsweise geschweißt, beispielsweise pressgeschweißt, widerstandsgeschweißt oder schmelzgeschweißt sein, um das Kontaktelement 9 auszubilden.

Die Erfindung ist in den Ausführungsbeispielen im Wesentlichen anhand der ersten Variante (stoffschlüssige Verbindung zwischen Innenleiter 4 und Kontaktelement 9) beschrieben. Merkmale und Vorteile, die diesbezüglich genannt werden sind allerdings auch auf die zweite Variante der Erfindung zu beziehen, sofern dies technisch nicht ausgeschlossen ist.

Das Kontaktelement 9 weist einen Anschlussbereich 12 zur Verbindung mit einem Gegenkontaktelement 13 (vgl. Figuren 4 bis 7) für einen mit dem elektrischen Steckverbinder 10 verbindbaren elektrischen Gegensteckverbinder 14 (vgl. Figur 12) auf. Der Anschlussbereich 12 weist im Ausführungsbeispiel eine Zentrierbohrung 15 zur Aufnahme bzw. zur Verbindung mit einem hülsenförmigen bzw. pinförmigen Gegenkontaktelement 13 auf. Vorzugsweise ist der Verbindungsbereich 16 zwischen dem Innenleiter 4 und dem Kontaktelement 9 an einem dem Anschlussbereich 12 gegenüberliegenden Ende des Kontaktelements 9 angeordnet.

Dadurch, dass der Innenleiter 4 stoffschlüssig mit dem Kontaktelement 9 verbunden ist oder selbst das Kontaktelement 9 ausbildet, kann eine Orientierung O (vgl. Figur 1) bzw. eine Verkippung des Kontaktelements 9 bezüglich seiner Längsachse L vorteilhaft vorgegeben oder ausgeglichen werden. Ferner kann die Position P (vgl. Figur 1) des Kontaktelements 9 relativ zu dem Kabels 1, beispielsweise die Position des vorderen Endes (z. B. des Anschlussbereichs 12) des Kontaktelements 9, vorteilhaft vorgegeben oder korrigiert werden. Schließlich kann auch in vorteilhafter Weise ein Abgangswinkel α (vgl. Figur 2) zwischen der Mittelachse M des Kabels 1 und der Längsachse L des Kontaktelements 9 vorgegeben werden oder korrigiert werden. Auch der Abstand zwischen dem Kontaktelement 9 und der Mittelachse M des Kabels 1 bzw. zwischen dem Kontaktelement 9 und dem Kühlkanal 2 kann durch die erfindungsgemäß flexible Verbindung vorteilhaft vorgegeben oder korrigiert werden.

Insbesondere kann vorgesehen sein, dass das Kontaktelement 9 bezüglich seiner Längsachse L parallel zu der Mittelachse M des Kabels 1 ausgerichtet ist (Abgangswinkel α gleich Null, vgl. z. B. Figur 1) oder orthogonal (Abgangswinkel α gleich 90°, vgl. Figur 2) zu der Mittelachse M des Kabels 1 ausgerichtet ist. Es kann allerdings grundsätzlich ein beliebiger Abgangswinkel α vorgesehen sein.

Es kann vorgesehen sein, dass das Kontaktelement 9 von der Außenfläche des Kühlkanals 2 beabstandet ist. Vorzugsweise liegt das Kontaktelement 9 allerdings mittelbar oder unmittelbar an der Außenfläche des Kühlkanals 2 an, um eine wärmeleitfähige Verbindung mit dem Kühlkanal 2 herzustellen. Um die Berührfläche zwischen dem Kühlkanal 2 und dem Kontaktelement 9 noch zu vergrößern, kann außerdem vorgesehen sein, dass das Kontaktelement 9 eine Anlagefläche aufweist, insbesondere eine Vertiefung, um den Außenumfang des Kühlkanals 2 zumindest entlang eines Umfangsabschnitts zu umfassen (z. B. teilringförmig) oder vollständig zu umfassen (ringförmig).

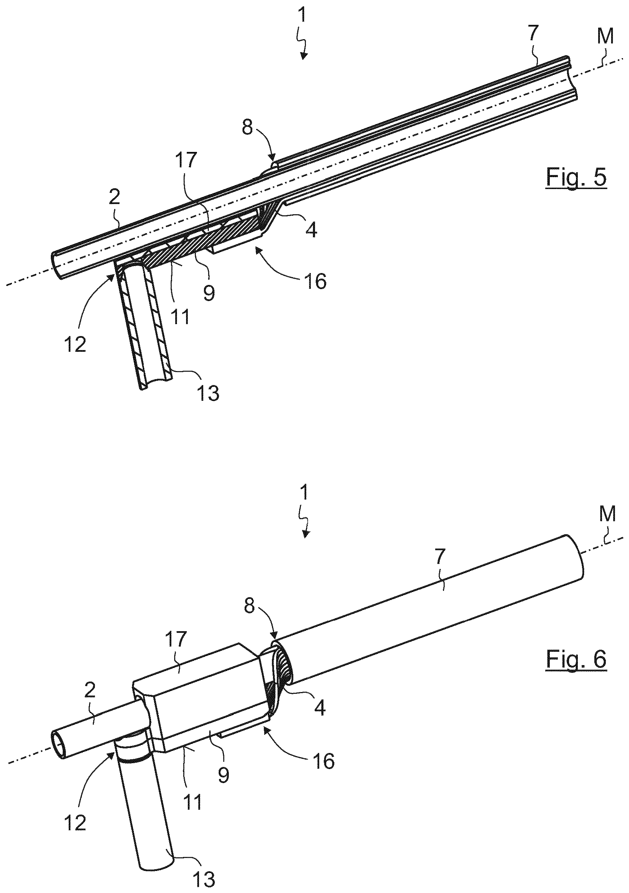

Es kann auch vorgesehen sein, dass zwischen dem Kontaktelement 9 und dem Kühlkanal 2 ein Verbindungselement 17 anliegt, wie in den Figuren 4 bis 7 dargestellt. Das Verbindungselement 17 kann vorzugsweise aus einem gut wärmeleitfähigen Kunststoff ausgebildet sein und eine wärmeleitfähige Verbindung zwischen dem Kühlkanal 2 und dem Kontaktelement 9 herstellen. Um die Berührfläche zwischen dem Verbindungselement 17 und dem Kühlkanal 2 noch zu vergrößern, kann vorgesehen sein, dass das Verbindungselement 17 eine Anlagefläche aufweist, insbesondere eine Vertiefung, beispielsweise eine wannenförmige bzw. rinnenförmige (teilringförmige) Vertiefung, wie in den Figuren 4 und 5 dargestellt. Es kann allerdings auch vorgesehen sein, dass das Verbindungselement 17 eine Durchgangsbohrung aufweist, um den Kühlkanal 2 vollständig (ringförmig) zu umfassen, wie in den Figuren 6 und 7 dargestellt.

Grundsätzlich eignet sich die Erfindung zur Verwendung mit einem ungeschirmten oder mit einem geschirmten Kabel 1. Rein beispielhaft ist in Figur 4 ein geschirmtes Kabel 1 dargestellt, wobei sich die Merkmale selbstverständlich auf alle Ausführungsbeispiele übertragen lassen.

Das geschirmte Kabel 1 weist einen zwischen dem Kabelmantel 7 und dem Innenleiter 4 bzw. dem Kühlkanal 2 verlaufenden Außenleiterschirm 18 auf, der durch einen Isolator 19 von dem Innenleiter 4 elektrisch getrennt ist. Zur stoffschlüssigen Verbindung des Innenleiters 4 mit dem Kontaktelement 9 oder zur Ausbildung des Kontaktelements 9 durch den Innenleiter 4 kann der Innenleiter 4 somit auch von dem Isolator 19 und dem Außenleiterschirm 18 freigelegt werden. Um die elektromagnetische Verträglichkeit weiter zu verbessern, kann vorgesehen sein, den Außenleiterschirm 18 mit einer Gehäuseabschirmung (nicht dargestellt) im Bereich des Kontaktelements 9 zu verbinden.

In Figur 11 ist ein erfindungsgemäßer elektrischer Steckverbinder 10 in einer Explosionsdarstellung gezeigt, der zwei der bereits beschriebenen konfektionierten elektrischen Kabel 1 aufweist. Neben den bereits beschrieben Komponenten des elektrischen Kabels 1 weist der Steckverbinder 10 unter anderem eine Gehäusebaugruppe 20 auf. Die Gehäusebaugruppe 20 kann insbesondere ein Außengehäuse, beispielsweise aus einem Kunststoff, aufweisen. Ferner kann der Steckverbinder 10 Isolierschalen 21, 22 zur Aufnahme der Kontaktelemente 9 aufweisen. Im Ausführungsbeispiel der Figur 11 sind zur Aufnahme der Kontaktelemente 9 zweiteilige Isolierschalen 21, 22 vorgesehen, bestehend aus einer oberen Isolierschale 21 und einer unteren Isolierschale 22.

Der in Figur 11 dargestellte, beispielhafte elektrische Steckverbinder 10 weist zwei konfektionierte elektrische Kabel 1 auf, beispielsweise zur Verbindung mit einem positiven und einem negativen Pol einer Fahrzeugbatterie. Grundsätzlich kann ein elektrischer Steckverbinder 10 im Rahmen der Erfindung allerdings eine beliebige Anzahl konfektionierter elektrischer Kabel 1 aufweisen, beispielsweise auch nur ein elektrisches Kabel 1 oder auch mehr als zwei elektrische Kabel 1, beispielsweise drei elektrische Kabel 1, vier elektrische Kabel 1, fünf elektrische Kabel 1 oder sechs elektrische Kabel 1.

Der nur beispielhaft dargestellte elektrische Steckverbinder 10 kann ferner Berührschutzhülsen 23 für die Kontaktelemente 9 aufweisen, um ein unbeabsichtigtes Berühren der im späteren Betrieb spannungsführenden Kontaktelemente 9 zu verhindern.

Der elektrische Steckverbinder 10 kann ferner Anschlusskupplungen 24 zur Verbindung mit der Kühlvorrichtung 3 aufweisen. Zur Verbindung der Anschlusskupplung 24 mit dem Kühlkanal 2 kann eine Pressverbindung aus insbesondere einer Schlauchtülle 25 und einer Crimphülse 26 vorgesehen sein.

Der elektrische Steckverbinder 10 kann ferner eine jeweilige Leitungsdichtung 27, eine Kabelfesthaltung 28 und eine Abschlusskappe 29 aufweisen, um ein Eindringen von Staub und Feuchtigkeit in den Steckverbinder 10 an den Eintrittsstellen der Kabel 1 zu verhindern und/oder um einen ausreichenden Zugabfang für die Kabel 1 bereitzustellen.

Optional kann eine Transportschutzkappe 30 vorgesehen sein.

Es sei nochmals betont, dass der dargestellte elektrische Steckverbinder 10 lediglich beispielhaft zur Verwendung mit der Erfindung zu verstehen ist. Grundsätzlich kann sich die Erfindung zur Verwendung mit einem beliebigen elektrischen Steckverbinder 10 eignen (selbst für Steckverbinder mit winkligem Kabelabgang), insbesondere jedoch zur Verwendung mit einem elektrischen Steckverbinder 10 für die Hochvolttechnik, vorzugsweise im Bereich der Elektromobilität.

Figur 12 zeigt eine erfindungsgemäße elektrische Steckverbindung 31, aufweisend einen elektrischen Steckverbinder 10, beispielsweise den im Rahmen der Figur 11 bereits beschriebenen Steckverbinder 10, sowie einen schematisch angedeuteten elektrischen Gegensteckverbinder 14 einer elektrischen Einrichtung 32 in der Ausbildung als Buchse mit zwei hülsenförmigen Gegenkontaktelementen 13.

Figur 13 zeigt ein erfindungsgemäßes Verfahren zur Konfektionierung des elektrischen Kabels 1 anhand eines beispielhaften Verfahrensablaufs. Grundsätzlich sei erwähnt, dass der dargestellte Verfahrensablauf auch noch um weitere Verfahrensschritte erweitert werden kann. Ferner können Verfahrensschritte funktional weiter untergliedert werden oder auch entfallen.

Es kann in einem ersten Verfahrensschritt S1 zunächst vorgesehen sein, dass das als Meterware vorliegende elektrische Kabel 1 gemäß einer vorgegebenen Länge abgelängt wird.

In einem darauffolgenden, zweiten Verfahrensschritt S2 kann vorgesehen sein, dass der Innenleiter 4 an zumindest einem Kabelende von dem Kabelmantel 7 und gegebenenfalls von dem Isolator 19 und dem Außenleiterschirm 18 freigelegt wird.

In einem nachfolgenden, dritten Verfahrensschritt S3 kann vorgesehen sein, dass der Innenleiter 4, insbesondere ein als Litze ausgebildeter Innenleiter 4, aufgefächert wird.

In einem darauffolgenden, vierten Verfahrensschritt S4 kann vorgesehen sein, dass der zuvor aufgefächerte Innenleiter 4 in dem Winkelsegment bzw. Kreissegment K gebündelt wird.

In einem darauffolgenden, fünften Verfahrensschritt S5 kann vorgesehen sein, dass der aufgefächerte und gebündelte Innenleiter 4 mit einem separaten Kontaktelement 9 stoffschlüssig verbunden, insbesondere verschweißt wird. Alternativ kann in dem fünften Verfahrensschritt S5 vorgesehen sein, dass der aufgefächerte und gebündelte Innenleiter 4 zur Ausbildung eines einteiligen Kontaktelements 9 plattenförmig kompaktiert wird, vorzugsweise durch eine Schweißtechnik.

In einem optionalen, sechsten Verfahrensschritt S6 kann beispielsweise vorgesehen sein, dass weitere Komponenten des elektrischen Steckverbinders 10 auf dem elektrischen Kabel 1 montiert werden.

Das erfindungsgemäße Verfahren, beispielsweise gemäß dem beschriebenen Verfahrensablauf, kann als Computerprogrammprodukt mit Programmcodemitteln auf einer Steuereinrichtung 33 einer Kabelkonfektionierungsvorrichtung ausgeführt werden.

## Patentansprüche

1. Konfektioniertes elektrisches Kabel (1), aufweisend
a) einen sich entlang der Mittelachse (M) des Kabels (1) erstreckenden Kühlkanal (2);
b) wenigstens einen entlang der Außenfläche des Kühlkanals (2) verlaufenden Innenleiter (4);
c) einen den Innenleiter (4) und den Kühlkanal (2) in sich führenden Kabelmantel (7); und
d) ein Kontaktelement (9) für einen elektrischen Steckverbinder (10), das elektrisch und mechanisch mit zumindest einem von dem Kabelmantel (7) freigelegten Abschnitt des Innenleiters (4) verbunden ist,
wobei der Innenleiter (4)
- als Litze aus mehreren Einzeldrähten ausgebildet ist, die einzeln oder paketweise entlang des Umfangs des Kühlkanals (2) verteilt sind, wobei ein Großteil oder alle Einzeldrähte der Litze an deren Austrittsstelle (8) aus dem Kabelmantel (7) zusammengeführt bzw. gebündelt sind, **dadurch gekennzeichnet, dass** der Innenleiter (4) stoffschlüssig mit einer von dem Kühlkanal (2) abgewandten Oberfläche (11) des Kontaktelements (9) verbunden ist; oder
- plattenförmig kompaktiert ist, um das Kontaktelement (9) auszubilden.

2. Konfektioniertes elektrisches Kabel (1) nach Anspruch 1,
**dadurch gekennzeichnet , dass**
der Kühlkanal (2) koaxial zu der Mittelachse (M) des Kabels (1) verläuft.

3. Konfektioniertes elektrisches Kabel (1) nach Anspruch 1 oder 2,
**dadurch gekennzeichnet , dass**
der Innenleiter (4) mit dem Kontaktelement (9) verschweißt, vorzugweise pressgeschweißt, widerstandsgeschweißt oder schmelzgeschweißt ist, um die stoffschlüssige Verbindung auszubilden.

4. Konfektioniertes elektrisches Kabel (1) nach einem der Ansprüche 1 bis 3,
**dadurch gekennzeichnet , dass**
der Innenleiter (4) geschweißt, vorzugweise pressgeschweißt, widerstandsgeschweißt oder schmelzgeschweißt ist, um das Kontaktelement (9) auszubilden.

5. Konfektioniertes elektrisches Kabel (1) nach einem der Ansprüche 1 bis 4,
**dadurch gekennzeichnet , dass**
das Kontaktelement (9) einen Anschlussbereich (12), insbesondere mit einer Zentrierbohrung (15), zur Verbindung mit einem Gegenkontaktelement (13) eines elektrischen Gegensteckverbinders (14) ausbildet.

6. Konfektioniertes elektrisches Kabel (1) nach einem der Ansprüche 1 bis 5,
**dadurch gekennzeichnet , dass**
wenigstens ein Abschnitt des Kontaktelements (9) unmittelbar an der Außenfläche des Kühlkanals (2) anliegt, um eine wärmeleitfähige Verbindung mit dem Kühlkanal (2) herzustellen.

7. Konfektioniertes elektrisches Kabel (1) nach einem der Ansprüche 1 bis 5,
**dadurch gekennzeichnet , dass**
zwischen dem Kontaktelement (9) und dem Kühlkanal (2) ein Verbindungselement (17) angeordnet ist, das an dem Kontaktelement (9) und an dem Kühlkanal (2) anliegt, um eine wärmeleitfähige Verbindung zwischen dem Kühlkanal (2) und dem Kontaktelement (9) herzustellen.

8. Konfektioniertes elektrisches Kabel (1) nach Anspruch 6 oder 7,
**dadurch gekennzeichnet , dass**
das Verbindungselement (17) oder das Kontaktelement (9) auf seiner dem Kühlkanal (2) zugewandten Oberfläche eine Anlagefläche aufweist, insbesondere eine dem Kühlkanal (2) komplementäre Vertiefung oder eine sonstige Vertiefung, die den Kühlkanal (2) zumindest entlang eines Umfangsabschnitts an seinem Außenumfang umfasst.

9. Konfektioniertes elektrisches Kabel (1) nach einem der Ansprüche 1 bis 8,
**dadurch gekennzeichnet , dass**
der Innenleiter (4) und/oder das Kontaktelement (9) mit einer Wärmeleitpaste beschichtet ist.

10. Elektrischer Steckverbinder (10) mit einer Gehäusebaugruppe (20) und mit zumindest einem konfektionierten elektrischen Kabel (1) gemäß einem der Ansprüche 1 bis 9.

11. Elektrische Steckverbindung (31), aufweisend einen elektrischen Steckverbinder (10) nach Anspruch 10 sowie einen mit dem elektrischen Steckverbinder (10) verbindbaren elektrischen Gegensteckverbinder (14).

12. Verfahren zur Konfektionierung eines elektrischen Kabels (1), wobei das konfektionierte elektrische Kabel aufweist:
- einen sich entlang der Mittelachse (M) des Kabels (1) erstreckenden Kühlkanal (2);
- wenigstens einen entlang der Außenfläche des Kühlkanals (2) verlaufenden Innenleiter (4);
- einen den Innenleiter (4) und den Kühlkanal (2) in sich führenden Kabelmantel (7); und
- ein Kontaktelement (9) für einen elektrischen Steckverbinder (10), das elektrisch und mechanisch mit zumindest einem von dem Kabelmantel (7) freigelegten Abschnitt des Innenleiters (4) verbunden ist, mit zumindest den folgenden Verfahrensschritten:
a) Freilegen des Innenleiters (4) des Kabels (1) von einem den Innenleiter (4) in sich führenden Kabelmantel (7) in zumindest einem Abschnitt des Kabels (1);
b) stoffschlüssiges Verbinden des Innenleiters (4), wenn dieser als Litze aus mehreren Einzeldrähten ausgebildet ist, die einzeln oder paketweise entlang des Umfangs des Kühlkanals (2) verteilt sind, wobei ein Großteil oder alle Einzeldrähte der Litze an deren Austrittsstelle (8) aus dem Kabelmantel (7) zusammengeführt bzw. gebündelt sind, mit einer von dem Kühlkanal (2) abgewandten Oberfläche (11) des Kontaktelements (9) oder plattenförmiges Kompaktieren des Innenleiters (4) zur Ausbildung des mit dem Innenleiter (4) einteiligen Kontaktelements (9).

## Claims

1. An assembled electrical cable (1) having
a) a cooling channel (2) extending along the center axis (M) of the cable (1);
b) at least one inner conductor (4) running along the outer surface of the cooling channel (2);
c) a cable sheath (7) guiding the inner conductor (4) and the cooling channel (2) within itself; and
d) a contact element (9) for an electrical plug connector (10), which contact element is electrically and mechanically connected to at least a portion of the inner conductor (4) exposed from the cable sheath (7),
wherein
the inner conductor (4)
- is formed as a stranded wire formed from a plurality of individual wires which are distributed individually or in groups along the circumference of the cooling channel (2), wherein a majority of or all individual wires of the stranded wire are amalgamated or bundled at their exit point (8) from the cable sheath (7),
**characterized in that** the inner conductor (4) is connected to a surface (11) of the contact element (9) facing away from the cooling channel (2) in an integrally bonded manner; or
- is compacted in a plate-like manner in order to form the contact element (9).

2. The assembled electrical cable (1) as claimed in claim 1,
**characterized in that**
the cooling channel (2) runs coaxially with the center axis (M) of the cable (1).

3. The assembled electrical cable (1) as claimed in claim 1 or 2,
**characterized in tha**t
the inner conductor (4) is welded to the contact element (9), preferably press-welded, resistance-welded or fusion-welded, in order to form the integrally bonded connection.

4. The assembled electrical cable (1) as claimed in one of claims 1 to 3,
**characterized in that**
the inner conductor (4) is welded, preferably press-welded, resistance-welded or fusion-welded, in order to form the contact element (9).

5. The assembled electrical cable (1) as claimed in one of claims 1 to 4,
**characterized in that**
the contact element (9) forms a connection region (12) in particular with a centering bore (15), for connection to a mating contact element (13) of an electrical mating plug connector (14).

6. The assembled electrical cable (1) as claimed in one of claims 1 to 5,
**characterized in that**
at least a portion of the contact element (9) bears directly against the outer surface of the cooling channel (2) in order to produce a heat-conductive connection to the cooling channel (2).

7. The assembled electrical cable (1) as claimed in one of claims 1 to 5,
**characterized in that**
a connection element (17) is arranged between the contact element (9) and the cooling channel (2) and bears against the contact element (9) and against the cooling channel (2) in order to produce a heat-conductive connection between the cooling channel (2) and the contact element (9).

8. The assembled electrical cable (1) as claimed in claim 6 or 7,
**characterized in that**
the connection element (17) or the contact element (9) has, on its surface facing the cooling channel (2), a contact face, in particular an indentation complimentary to the cooling channel (2) or another indentation which surrounds the cooling channel (2) at its outer circumference at least along a circumferential portion.

9. The assembled electrical cable (1) as claimed in one of claims 1 to 8,
**characterized in that**
the inner conductor (4) and/or the contact element (9) is coated with a heat-conducting paste.

10. An electrical plug connector (10) with a housing module (20) and with at least one assembled electrical cable (1), according to one of claims 1 to 9.

11. An electrical plug connection (31), having an electrical plug connector (10) as claimed in claim 10 and an electrical mating plug connector (14) connectable to the electrical plug connector (10).

12. A method for assembling an electrical cable (1), the pre-assembled electrical cable comprising:
- a cooling channel (2) extending along the center axis (M) of the cable (1);
- at least one inner conductor (4) running along the outer surface of the cooling channel (2);
- a cable sheath (7) guiding the inner conductor (4) and the cooling channel (2) within itself; and
- a contact element (9) for an electrical plug connector (10), which contact element is electrically and mechanically connected to at least a portion of the inner conductor (4) exposed from the cable sheath (7),
having at least the following method steps:
a) exposing the inner conductor (4) of the cable (1), in at least a portion of the cable (1), from a cable sheath (7), guiding the inner conductor (4) within itself;
b) connecting the inner conductor (4) to a surface (11) of the contact element (9) facing away from the cooling channel (2) in an integrally bonded manner, if the inner conductor (4) is formed as a stranded wire formed from a plurality of individual wires which are distributed individually or in groups along the circumference of the cooling channel (2), wherein a majority of or all individual wires of the stranded wire are amalgamated or bundled at their exit point (8) from the cable sheath (7), or compacting the inner conductor (4) in a plate-like manner to form the contact element (9) in one part with the inner conductor (4).

## Revendications

1. Câble électrique préassemblé (1) comprenant
a) un canal de refroidissement (2) s'étendant le long de l'axe central (M) du câble (1) ;
b) au moins un conducteur interne (4) s'étendant le long de la surface extérieure du canal de refroidissement (2) ;
c) une gaine de câble (7) contenant le conducteur interne (4) et le canal de refroidissement (2) ; et
d) un élément de contact (9) pour un connecteur électrique enfichable (10), qui est relié électriquement et mécaniquement à au moins une partie du conducteur interne (4) exposée par la gaine de câble (7), le conducteur interne (4)
- étant conçu comme un toron composé de plusieurs fils individuels qui sont répartis individuellement ou par paquets le long de la circonférence du canal de refroidissement (2), une grande partie ou la totalité des fils individuels du toron étant regroupés ou rassemblés à leur point de sortie (8) hors de la gaine de câble (7), **caractérisé en ce que**
le conducteur interne (4) est relié par adhérence de matière à une surface (11) de l'élément de contact (9) opposée au canal de refroidissement (2) ;
ou
- est compacté sous forme de plaque pour former l'élément de contact (9).

2. Câble électrique préassemblé (1) selon la revendication 1, **caractérisé en ce que** le canal de refroidissement (2) s'étend coaxialement à l'axe central (M) du câble (1).

3. Câble électrique préassemblé (1) selon la revendication 1 ou 2, **caractérisé en ce que** le conducteur interne (4) est soudé, de préférence par soudage par pression, soudage par résistance ou soudage par fusion, à l'élément de contact (9) afin de former la liaison par adhérence.

4. Câble électrique préassemblé (1) selon l'une des revendications 1 à 3, **caractérisé en ce que** le conducteur interne (4) est soudé, de préférence par soudage par pression, soudage par résistance ou soudage par fusion, afin de former l'élément de contact (9).

5. Câble électrique préassemblé (1) selon l'une des revendications 1 à 4, **caractérisé en ce que** l'élément de contact (9) forme une zone de raccordement (12), en particulier avec un alésage de centrage (15), pour la connexion avec un élément de contact complémentaire (13) d'un connecteur électrique complémentaire (14).

6. Câble électrique préassemblé (1) selon l'une des revendications 1 à 5, **caractérisé en ce qu'**au moins une partie de l'élément de contact (9) repose directement contre la surface extérieure du canal de refroidissement (2) afin d'établir une connexion thermoconductrice avec le canal de refroidissement (2).

7. Câble électrique préassemblé (1) selon l'une des revendications 1 à 5, **caractérisé en ce qu'**un élément de liaison (17) est disposé entre l'élément de contact (9) et le canal de refroidissement (2), lequel élément de liaison repose contre l'élément de contact (9) et contre le canal de refroidissement (2) afin d'établir une liaison thermoconductrice entre le canal de refroidissement (2) et l'élément de contact (9).

8. Câble électrique préassemblé (1) selon la revendication 6 ou 7, **caractérisé en ce que** l'élément de liaison (17) ou l'élément de contact (9) présente, sur sa surface tournée vers le canal de refroidissement (2), une surface d'appui, en particulier un renfoncement complémentaire au canal de refroidissement (2) ou un autre renfoncement qui entoure le canal de refroidissement (2) au moins le long d'une partie périphérique de sa circonférence extérieure.

9. Câble électrique préassemblé (1) selon l'une des revendications 1 à 8, **caractérisé en ce que** le conducteur interne (4) et/ou l'élément de contact (9) est recouvert d'une pâte thermoconductrice.

10. Connecteur électrique enfichable (10) comprenant un ensemble de boîtier (20) et au moins un câble électrique préassemblé (1) selon l'une des revendications 1 à 9.

11. Connexion électrique enfichable (31) comprenant un connecteur électrique enfichable (10) selon la revendication 10 et un connecteur électrique complémentaire (14) pouvant être connecté au connecteur électrique enfichable (10).

12. Procédé de préassemblage d'un câble électrique (1), le câble électrique préassemblé comprenant :
- un canal de refroidissement (2) s'étendant le long de l'axe central (M) du câble (1) ;
- au moins un conducteur interne (4) s'étendant le long de la surface extérieure du canal de refroidissement (2) ;
- une gaine de câble (7) contenant le conducteur interne (4) et le canal de refroidissement (2) ; et
- un élément de contact (9) pour un connecteur électrique enfichable (10), qui est relié électriquement et mécaniquement à au moins une partie du conducteur interne (4) dégagée de la gaine de câble (7), comprenant au moins les étapes suivantes :
a) dégagement du conducteur interne (4) du câble (1) d'une gaine de câble (7) contenant le conducteur interne (4) dans au moins une partie du câble (1) ;
b) raccord par liaison matière du conducteur interne (4) lorsque celui-ci est constitué d'un toron composé de plusieurs fils individuels qui sont répartis individuellement ou par paquets le long de la circonférence du canal de refroidissement (2), une grande partie ou la totalité des fils individuels du toron étant regroupés ou rassemblés à leur point de sortie (8) de la gaine de câble (7) avec une surface (11) de l'élément de contact (9) opposée au canal de refroidissement (2) ou compactage en forme de plaque du conducteur interne (4) pour former l'élément de contact (9) d'un seul tenant avec le conducteur interne (4).
